(19) Europäisches Patentamt
European Patent Office
Office européen des brevets

(11) EP 1 351 965 B1

# (12) EUROPÄISCHE PATENTSCHRIFT

(45) Veröffentlichungstag und Bekanntmachung des Hinweises auf die Patenterteilung:
**06.12.2006 Patentblatt 2006/49**

(21) Anmeldenummer: **01994833.0**

(22) Anmeldetag: **28.12.2001**

(51) Int Cl.:
*C07F 9/12* (2006.01) *C08K 5/523* (2006.01)

(86) Internationale Anmeldenummer:
**PCT/EP2001/015350**

(87) Internationale Veröffentlichungsnummer:
**WO 2002/055526 (18.07.2002 Gazette 2002/29)**

## (54) PHOSPHORHALTIGES FLAMMSCHUTZMITTEL UND FLAMMWIDRIGE THERMOPLASTISCHE FORMMASSEN

PHOSPHORIC FLAME-RETARDANT AND FLAME-RETARDING THERMOPLASTIC MOLDING COMPOUNDS

PRODUIT IGNIFUGE CONTENANT DU PHOSPHORE ET MATIERES MOULABLES THERMOPLASTIQUES IGNIFUGES

(84) Benannte Vertragsstaaten:
**AT BE CH CY DE DK ES FI FR GB GR IE IT LI LU MC NL PT SE TR**

(30) Priorität: **09.01.2001 DE 10100591**

(43) Veröffentlichungstag der Anmeldung:
**15.10.2003 Patentblatt 2003/42**

(73) Patentinhaber: **Bayer MaterialScience AG**
**51368 Leverkusen (DE)**

(72) Erfinder:
- **SEIDEL, Andreas**
  **41542 Dormagen (DE)**
- **BAUMANN, Käthe**
  **42109 Wuppertal (DE)**
- **ECKEL, Thomas**
  **41540 Dormagen (DE)**
- **ZOBEL, Michael**
  **50823 Köln (DE)**
- **STÖLTING, Jörn**
  **51061 Köln (DE)**
- **WITTMANN, Dieter**
  **51375 Leverkusen (DE)**

(56) Entgegenhaltungen:
**EP-A- 0 501 582**
**WO-A-00/77012**
**WO-A-01/34683**
**JP-A- 57 055 947**

- **CHEMICAL ABSTRACTS, vol. 97, no. 16, 18. Oktober 1982 (1982-10-18) Columbus, Ohio, US; abstract no. 128624, ADEKA ARGUS CHEMICAL CO., LTD., JAPAN: "Weather-resistant halopolymers" XP002193237 & JP 57 055947 A (ADEKA ARGUS CHEMICAL CO., LTD., JAPAN) 3. April 1982 (1982-04-03)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 351 965 B1

## Beschreibung

Die Erfindung betrifft neue Oligophosphate, die als Flammschutzmittel wirken, sowie diese enthaltene thermoplastische Zusammensetzungen (Formmassen) mit verbesserter Wärmeformbeständigkeit, gutem Verarbeitungsverhalten und daraus erhältliche Formkörper.

Flammwidrig ausgerüstete, schlagzähmodifizierte Polycarbonat-Formmassen sind bekannt. Als Flammschutzmittel kommen oft phosphorhaltige Verbindungen, im großtechnischen Maßstab insbesondere aromatische Phosphorsäureester zum Einsatz.

Die US-A 5 061 745 beschreibt Polymermischungen aus aromatischem Polycarbonat, ABS-Pfropfpolymerisat und/oder styrolhaltigem Copolymer und Monophosphorsäureestem als Flammschutzadditiv. Ein Nachteil dieser Monophosphorsäureester ist ihre Weichmacherwirkung, die zu einer deutlichen Verringerung der Wärmeformbeständigkeit der Polymerzusammensetzungen führt. Des weiteren besitzen diese Verbindungen eine für viele Anwendungen zu hohe Flüchtigkeit sowie die Fähigkeit zur Migration in der Polymerzusammensetzung, was unter ungünstigen Verarbeitungsbedingungen beim Spritzguss zum Ausbluten des Flammschutzadditivs und zur Ausbildung von unerwünschten Verschmutzungen der Spritzgusswerkzeugoberflächen, dem sogenannten "Juicing-Phänomen" führen kann.

Durch Einsatz von oligomeren Phosphorsäureestern oder Mischungen aus Oligo- und Monophosphorsäureestem als Flammschutzmittel in PC/ABS-Formmassen, wie er in den EP-A 0 363 608 und EP-A 0 640 655 beschrieben wird, kann das Juicing-Phänomen weitestgehend unterbunden und die Wärmeformbeständigkeit des Materials leicht erhöht werden. Für viele Anwendungen ist die dadurch erzielte Wärmeformbeständigkeit jedoch nicht ausreichend.

In der WO 99/07779 wird der Einsatz von Oligophosphaten auf Basis von Biphenylendihydroxid als Flammschutzmittel in PC/ABS-Formmassen beschrieben. Dieses Phosphat übt auf die Polymerzusammensetzung eine deutlich geringere Weichmacherwirkung aus, so dass höhere Wärmeformbeständigkeiten realisiert werden können. Allerdings weisen die mit diesem Additiv ausgerüsteten Formmassen eine schlechte Fließfähigkeit auf, die für eine Verarbeitung des Materials im Spritzgussverfahren in vielen Fällen nicht ausreichend ist.

In der JP-A 57-55947 wird der Einsatz von 1,1'-(4,4'-Diphenyl-)cyclohexyliden-verbrückten Diphosphaten in PVC-Zusammensetzungen beschrieben. In der älteren Anmeldung WO-A 01/34683 werden Phosphonat-Homopolymere oder -Copolymere offenbart, welche als Bindeglied auch Bisphenol-A und davon abgeleitete Derivate enthalten.

Weitere Oligophosphorsäureester und deren Einsatz als Flammschutzmittel in PC/ABS-Formmassen werden in der EP-A 0 816 434 (Oligophosphate auf Basis Bisphenol-S), der EP-A 0 672 717 (alkylsubstituierte Oligophosphate vom p-Hydrochinontyp), der US 5 455 292 (alkylsubstituierte Oligophosphate auf Basis Bisphenol-A), der US 5 864 004 (Oligophosphate auf Basis Bisphenol-A) und der US 5 183 905 (Oligophosphate auf Basis von Phenolphthalein) beschrieben. Mit diesen Verbindungen flammwidrig ausgerüstete PC/ABS-Formmassen weisen zwar eine gegenüber konventionellen Flammschutzmitteln verbesserte, aber für viele Anwendungen noch nicht ausreichende Wärmeformbeständigkeit auf oder aber zeigen Defizite in der Fließfähigkeit oder Zähigkeit.

Die der Erfindung zugrunde liegende Aufgabe besteht folglich darin, flammwidrig ausgerüstete PC/ABS-Formmassen bereitzustellen, die bei verbesserter Wärmeformbeständigkeit ein gutes Zähigkeitsniveau und ausgezeichnete Fließfähigkeit besitzen.

Gelöst wird diese Aufgabe durch Oligophosphate ausgewählt aus der Gruppe bestehend aus

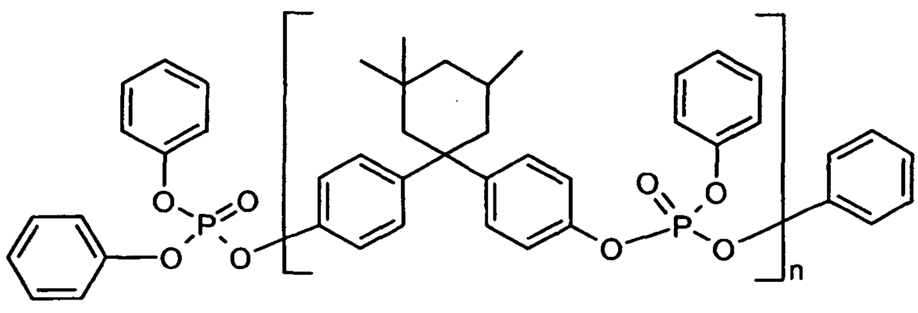

,

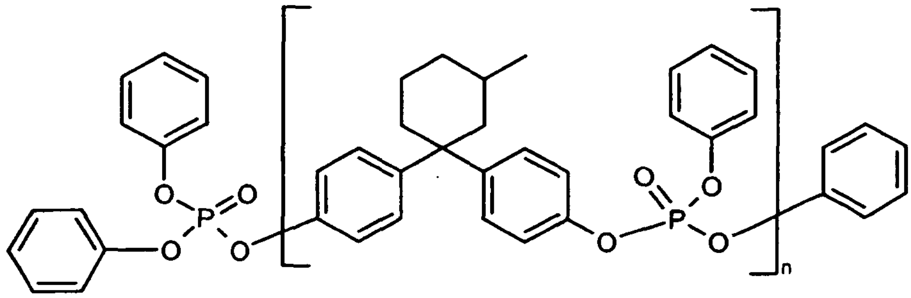

und

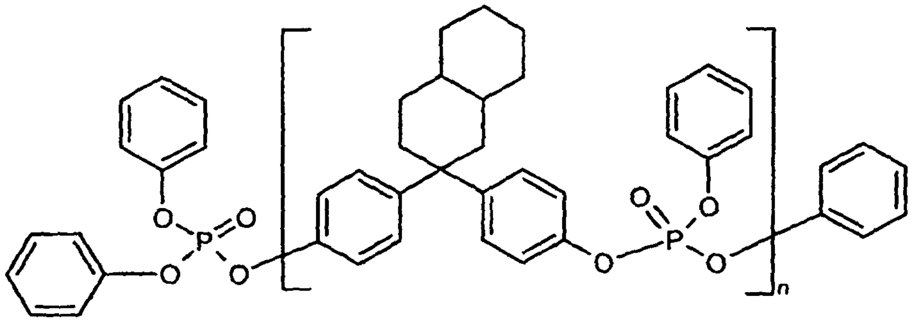

,

worin n jeweils eine ganze Zahl von 1 bis 30 bedeutet.

Gegenstand der Erfindung sind ferner zuvor genannte Verbindungen als Flammschutzmittel enthaltende thermoplastische Zusammensetzungen, insbesondere Polycarbonat-Zusammensetzungen, die auch schlagzähmodifiziert sein können sowie diese thermoplastischen Zusammensetzungen enthaltende Formkörper.

Die erfindungsgemäßen Flammschutzmittel ermöglichen thermoplastische Zusammensetzungen oder Formkörper mit deutlich verbesserter Wärmeformbeständigkeit, guter Fließfähigkeit und verbessertem Verhalten gegenüber Lösungsmitteln (ESC-Verhalten).

Die erfindungsgemäßen Oligophosphate können als Flammschutzmittel in thermoplastischen Zusammensetzungen in Mengen von 1 bis 40 Gew.-%, vorzugsweise von 2 bis 25 Gew.-%, besonders bevorzugt 3 bis 20 Gew.-%, bezogen auf das Gewicht der Zusammensetzung, eingesetzt werden.

Die Herstellung der erfindungsgemäßen Oligophosphate kann erfolgen durch Veresterung von geeigneten, zwei aromatische Hydroxyfunktionen enthaltenden Verbindungen mit beispielsweise Phosphorsäurediphenylesterhalogenid in Gegenwart einer Base. Ein besonders bevorzugtes Oligophosphat wird beispielsweise durch Veresterung von Trimethylcyclohexyl(TMC)-Bisphenol mit Phosphorsäurediphenylesterchlorid in Gegenwart von Triethylamin gemäß der folgenden Reaktionsgleichung erhalten:

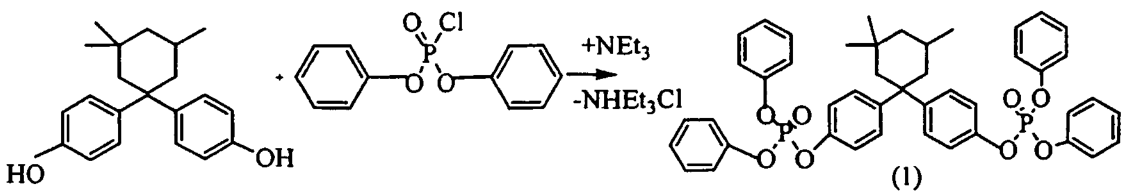


(1)

Die erfindungsgemäßen thermoplastischen Zusammensetzungen, insbesondere Polycarbonat-Zusammensetzungen, können neben den zuvor beschriebenen Flammschutzmitteln auch weitere thermoplastische Polymere, insbesondere Polyestercarbonate, Polyester, ABS-Pfropfpolymerisate und Vinyl(Co)Polymerisate enthalten. Diese Bestandteile und weitere in diesen erfindungsgemäßen Zusammensetzungen einsetzbare Komponenten werden anschließend beispielhaft erläutert.

Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I)

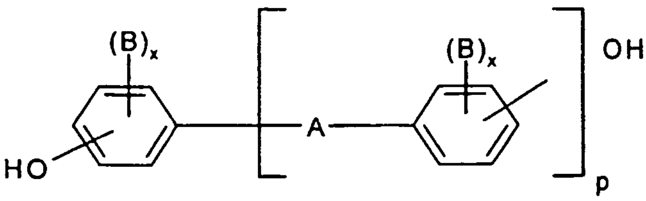

(I),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

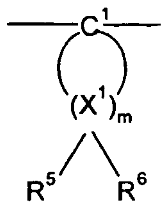

(II)

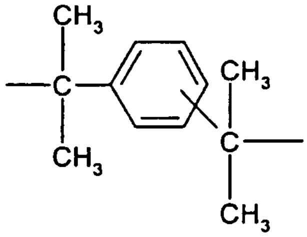

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_W$, gemessen z.B. durch Ultrazentrifuge oder Streulichtmessung) von 10.000 bis 200.000, vorzugsweise 15.000 bis 80.000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mol Diphenol und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

Die Komponente A kann in den erfindungsgemäßen Zusammensetzungen in einer Menge von vorzugsweise 5 bis 95 Gew.-%, besonders bevorzugt 10 bis 90 Gew.-% und in am meisten bevorzugter Weise 20 bis 80 Gew.-%, bezogen auf die Masse der Zusammensetzung, enthalten sein.

<u>Komponente B</u>

Die Komponente B umfasst ein oder mehrere Pfropfpolymerisate von

B.1 5 bis 95, vorzugsweise 30 bis 90 Gew.-%, wenigstens eines Vinylmonomeren auf

B.2 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere B.1 sind vorzugsweise Gemische aus

B.1.1 50 bis 99 Gew.-Teilen Vinylaromaten und/oder kemsubstituierten Vinylaromaten (wie beispielsweise Styrol, $\alpha$-Methylstyrol, p-Methylstyrol, p-Chlorstyrol) und/oder Methacrylsäure-($C_1$-$C_8$)-Alkylester (wie Methylmethacrylat, Ethylmethacrylat) und

B.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester (wie Methylmethacrylat, n-Butylacrylat, tert.-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, $\alpha$-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z.B. auf Basis Butadien, Isopren) oder Gemische von

Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z.B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vemetzende Monomere sind die cyclischen Monomere Triallylcyanurat, Triallylisocyanurat, Triacryloylhexahydro-s-triazin, Triallylbenzole. Die Menge der vemetzten Monomere beträgt vorzugsweise 0,02 bis 5, insbesondere 0,05 bis 2 Gew.-%, bezogen auf die Pfropfgrundlage B.2.

Bei cyclischen vemetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage B. 2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann in den erfindungsgemäßen Zusammensetzungen in einer Menge von vorzugsweise 1 bis 60 Gew.-%, besonders bevorzugt 1 bis 40 Gew.-% und in am meisten bevorzugter Weise 2 bis 30 Gew.-%, bezogen auf die Masse der Zusammensetzung, enthalten sein.

<u>Komponente C</u>

Die Komponente C umfasst ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-($C_1$ bis $C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie Methylmethacrylat, n-Butylacrylat, tert.-Butyl-acrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte $M_w$ (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen drei- oder vierwertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (z.B. Kunststoff-Handbuch, Band VIII, S. 695 ff., Carl-Hanser-Verlag, München 1973).

Die Komponente C kann in den erfindungsgemäßen Zusammensetzungen in einer Menge von vorzugsweise 0 bis 50 Gew.-%, besonders bevorzugt bis 30 Gew.-% und in am meisten bevorzugter Weise bis zu 20 Gew.-%, bezogen auf die Masse der Zusammensetzung, enthalten sein.

Komponente D

Die Komponente D umfasst feinstteilige anorganische Pulver.

Die erfindungsgemäß zum Einsatz kommenden feinstteiligen anorganischen Pulver D bestehen vorzugsweise aus einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder sind Verbindungen dieser Metalle mit wenigstens einem Element ausgewählt aus Sauerstoff, Wasserstoff, Schwefel, Phosphor, Bor, Kohlenstoff, Stickstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, Phosphaten, Hydroxiden, vorzugsweise aus $TiO_2$, $SiO_2$, $SnO_2$, ZnO, ZnS, Böhmit, $ZrO_2$, $Al_2O_3$, Aluminiumphosphate, Eisenoxide, ferner TiN, WC, AlO (OH), $SB_2O_3$, $NaSO_4$, Vanadianoxide, Zinkborat, Silikate wie Al-Silikate, Mg-Silikate, ein-, zwei-, dreidimensionale Silikate. Mischungen und dotierte Verbindungen sind ebenfalls verwendbar.

Des weiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide wie Böhmit oder $TiO_2$.

Die durchschnittlichen Teilchendurchmesser der Nanopartikel sind kleiner gleich 1000 nm, bevorzugt kleiner gleich 500 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al., Kolloid-Z. und Z. Polymere 250 (1972), S. 782-796.

Das anorganische Pulver wird in Mengen von 0 bis 40, vorzugsweise 0 bis 25, besonders bevorzugt von 0,1 bis 15 Gew.-%, bezogen auf das thermoplastische Material in die thermoplastische Formmasse eingearbeitet.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Formmassen eingearbeitet werden, beispielsweise durch direktes Kneten oder Extrudieren von Formmassen und den feinstteiligen anorganischen Pulvern.

Komponente E

Das erfindungsgemäße Flammschutzmittel kann in Kombination mit sogenannten Antidrippingmitteln verwendet werden, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden unter der Marke Teflon® 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 60 Gew.-%. In den Zusammensetzungen können fluorierte Polyolefine in Mengen von 0 bis 4 Gew.-%, vorzugsweise bis 2 Gew.-%, und besonders bevorzugt 0,1 bis 0,5 Gew.-%, bezogen auf die Masse der Zusammensetzung, enthalten sein.

F. Weitere Zusätze

Die erfindungsgemäßen Formmassen können weiterhin wenigstens eines der üblichen Additive, wie Gleit- und Entformungsmittel, beispielsweise Pentaerythrittetrastearat, Nukleiermittel, Antistatika, Stabilisatoren, Füll- und Verstärkungsstoffe wie Glas- oder Carbonfasem, Talk, Wollastonit, Glimmer, Kaolin, $CaCO_3$ und Glasschuppen sowie Farbstoffe und Pigmente enthalten.

Die erfindungsgemäßen Formmassen (Zusammensetzungen) können bis zu 35 Gew.-%, bezogen auf die Formmasse, eines weiteren, gegebenenfalls synergistisch wirkenden Flammschutzmittels enthalten. Beispielhaft werden als weitere Flammschutzmittel andere phosphorhaltige Verbindungen wie Organophosphate, Organophosphonate,

Phosphonatamine oder Phosphazene, organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdänoxid, Ammoniummolybdat, Zinkborat, Ammoniumborat, Bariummetaborat, Talk, Silikat, Aluminosilikat, Siliciumoxid und Zinnoxid sowie Siloxanverbindungen genannt.

Bevorzugt kommt als Flammschutz(FR)-Synergist außer den als Komponente D genannten feinstteiligen anorganischen Pulvern auch Talk zum Einsatz. Unter Talk wird ein natürlich vorkommender oder synthetisch hergestellter, gegebenenfalls kalzinierter Talk verstanden.

Reiner Talk hat die chemische Zusammensetzung 3 $MgO4SiO_2H_2O$ und somit einen MgO-Gehalt von 31,9 Gew.-% einen $SiO_2$-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silicium durch z.B. Aluminium und/oder durch Verwachsungen mit anderen Mineralien wie Dolomit, Magnesit und Chlorit verunreinigt sind.

Bevorzugt kommen Talktypen besonders hoher Reinheit zum Einsatz, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%. Besonders bevorzugte Talktypen zeichnen sich des weiteren aus durch einen $Al_2O_3$-Gehalt von kleiner als 5 Gew.-%, besonders bevorzugt kleiner als 1 Gew.-%, insbesondere kleiner als 0,7 Gew.-%.

Vorteilhaft ist insbesondere der Einsatz des erfindungsgemäßen Talks in Form von feinvermahlenen, gegebenenfalls oberflächenmodifizierten (silanisierten) Typen mit einer mittleren größten Teilchengröße $d_{50}$ von $< 20\ \mu m$, bevorzugt $< 10\ \mu m$, besonders bevorzugt $< 5\ \mu m$, ganz besonders bevorzugt $\leq 2,5\ \mu m$.

Die erfindungsgemäßen Formmassen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise auch zur Herstellung von folgenden Formkörpern oder Formteilen verwendet werden:

Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, Flächige Wandelemente, Gehäuse für Sicherheitseinrichtungen, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

## Beispiel 1

Die Beispiele 1 bis 4 zeigen die Herstellung erfindungsgemäßer Flammschutzmittel

Eine erfindungsgemäße Phosphor enthaltende Verbindung wird nach der folgenden Reaktion erhalten:

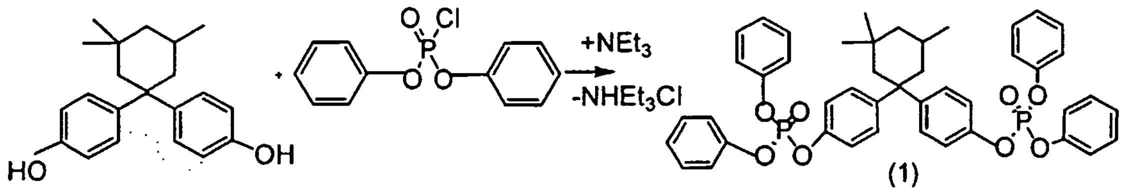


(1)

1,1 kg 3,3,5-Trimethylcyclohexyl(TMC)-Bisphenol und 1,0 l Triethylamin werden bei 5°C in 2,0 l Tetrahydrofuran vorgelegt. 2,0 kg Phosphorsäurediphenylesterchlorid werden gleichmäßig über einen Zeitraum von 2,5 Stunden bei 5 bis 9°C zugetropft. Anschließend wird 18 Stunden lang bei Raumtemperatur nachgerührt. Die Salze werden abgesaugt und mit tert.-Butylmethylether (3 x 400 ml) gewaschen. Die vereinten organischen Phasen werden mit 1N Natriumhydroxydlösung (3 x 500 ml) und Wasser (500 ml) gewaschen, über Magnesiumsulfat getrocknet und eingeengt. Der Rückstand wird in Dichlormethan (1000 ml) gelöst und nochmals mit 1N Natriumhydroxydlösung extrahiert (3 x 1000 ml), dann über Magnesiumsulfat getrocknet und eingeengt. So werden 2,0 kg der weißen, festen Zielverbindung (1) in einer Reinheit von 99 % erhalten, entsprechend 73 % der Theorie. Für diese Substanz werden folgende Analysenergebnisse erhalten:

| | |
|---|---|
| HPLC-MS: | Reinheit > 99 % Fläche |
| MS ($ES^+$): | 775 (24) [$MH^+$], 792 (100) [$M^+ + H_2O$] |
| P-Elementaranalyse: | 7,9 % (Theoriewert 8,0 %) |
| Säurezahl nach DIN: | 0,25 |
| Schmelzpunkt: | 89°C |

**Vergleichsbeispiel 2**

Eine als Vergleich dienende Phosphor enthaltende Verbindung wird nach der folgenden Reaktion erhalten:

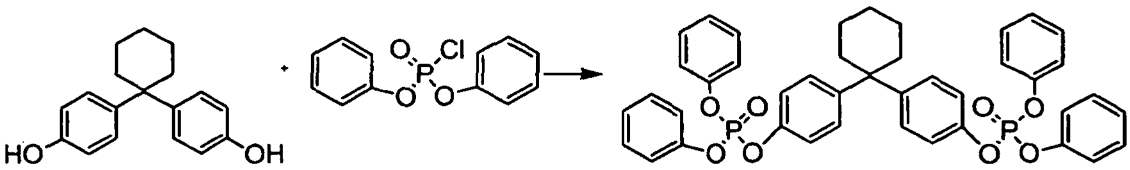

(2)

0,5 kg Cyclohexyl-1,1-bis(4-phenol) und 0,40 kg Triethylamin werden bei 0°C in 1,5 l Tetrahydrofuran vorgelegt. 1,05 kg Phosphorsäurediphenylesterchlorid werden gleichmäßig über einen Zeitraum von 3,5 Stunden bei -5 bis 12°C zugetropft. Anschließend wird 18 Stunden bei Raumtemperatur nachgerührt. Die Salze werden abgesaugt und mit tert.-Butylmethylether (4 x 1000 ml) gewaschen. Die vereinten organischen Phasen werden mit 1 N Natriumhydroxydlösung (5 x 500 ml) und Wasser (500 ml) gewaschen, über Magnesiumsulfat getrocknet und eingeengt. So werden 1,25 kg (2) in einer Reinheit von 100 % erhalten, entsprechend 91 % der Theorie. Für diese Substanz werden folgende Analysenergebnisse erhalten:

| | |
|---|---|
| HPLC: | Reinheit 100 % Fläche |
| MS ($ES^+$): | 733 (100) [$MH^+$] |
| P-Elementaranalyse: | 8,0 % (Theoriewert 8,4 %) |
| Säurezahl nach DIN: | 0,76 |

**Beispiel 3**

Eine erfindungsgemäße Phosphor enthaltende Verbindung wird nach der folgenden Reaktion erhalten:

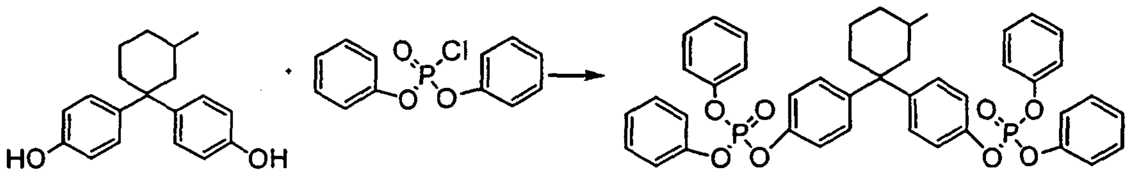

(3)

0,5 kg 3-Methylcyclohexyl-1,1-bis(4-phenol) und 0,38 kg Triethylamin werden bei 0°C in 1,5 l Tetrahydrofuran vorgelegt. 1,00 kg Phosphorsäurediphenylesterchlorid werden gleichmäßig über einen Zeitraum von 4,3 Stunden bei -8 bis 13°C zugetropft. Anschließend wird 18 Stunden bei Raumtemperatur nachgerührt. Die Salze werden abgesaugt und mit THF (1500 ml) und tert.-Butylmethylether (2 x 1000 ml) gewaschen. Die vereinten organischen Phasen werden mit 1N Natriumhydroxydlösung (5 x 500 ml) und Wasser (500 ml) gewaschen, über Magnesiumsulfat getrocknet und eingeengt. So werden 1,27 kg (3) in einer Reinheit von 100 % erhalten, entsprechend 96 % der Theorie. Für diese Substanz werden folgende Analysenergebnisse erhalten:

| | |
|---|---|
| HPLC: | Reinheit 100 % Fläche |
| MS ($ES^+$): | 747 (100) [$MH^+$] |
| P-Elementaranalyse: | 8,0 % (Theoriewert 8,3 %) |
| Säurezahl nach DIN: | 0,54 |

**Beispiel 4**

Eine erfindungsgemäße Phosphor enthaltende Verbindung wird nach der folgenden Reaktion erhalten:

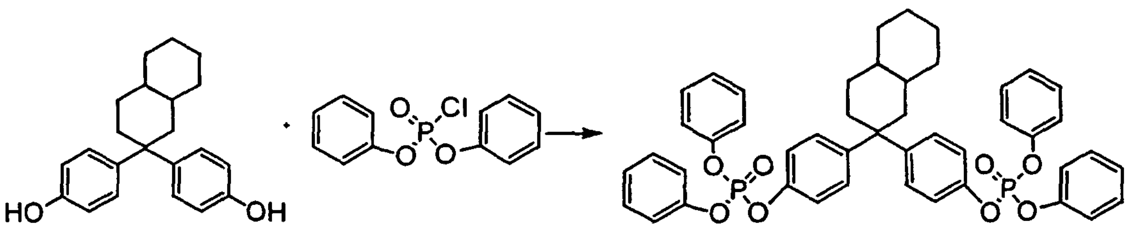

(4)

0,15 kg Decahydronaphthyl-2,2-bis(4-phenol) und 0,10 kg Triethylamin werden bei 0°C in 1,0 l Tetrahydrofuran vorgelegt. 0,26 kg Phosphorsäurediphenylesterchlorid werden gleichmäßig über einen Zeitraum von 2,5 Stunden bei -2 bis 18°C zugetropft. Anschließend wird 18 Stunden bei Raumtemperatur nachgerührt. Die Salze werden abgesaugt und mit tert.-Butylmethylether (3 x 700 ml) gewaschen. Die vereinten organischen Phasen werden mit 1N Natriumhydroxydlösung (5 x 500 ml) und Wasser (500 ml) gewaschen, über Magnesiumsulfat getrocknet und eingeengt. So werden 0,36 kg (4) in einer Reinheit von 67 % erhalten (Rest: Triphenylphosphat), entsprechend 66 % der Theorie. Für diese Substanz werden folgende Analysenergebnisse erhalten:

| | |
|---|---|
| HPLC: | Reinheit 67 % Fläche |
| MS (ES+): | 787 (100) [$MH^+$] |
| P-Elementaranalyse: | 7,9 % (Theoriewert 7,9 %) |
| Säurezahl nach DIN: | 0,27 |

Allgemeine Analysenmethoden

HPLC - HPLC-Messungen von Substanz in Beispiel 1 wurden auf einem Agilent 1100 Chromatographen mit dem HTS PAL-Injektor von CTC Analytics durchgeführt. Die Trennungen wurden auf der stationären Phase Inertsil ODS-3 (Länge: 250 mm, innerer Durchmesser 2,1 mm, Partikelgröße 5 µm) bei 40°C mit einer Flussrate von 0,2 ml/min erzielt. Die flüssige Phase bestand aus einem Gradienten aus A (Wasser + 0,01 % Ameisensäure) und B (Acetonitril + 0,05 % Ameisensäure) in der Zusammensetzung 5 % B bei 0 Minuten und einem Gradienten bis 100 % B bei 20 Minuten, dann 100 % B bei 30 Minuten. UV-Messungen wurden bei $\lambda$ = 214 nm durchgeführt.

HPLC-Messungen von Substanzen der Beispiele 2 bis 4 wurden auf einem Agilent 1100 Chromatographen mit dem HTS PAL-Injektor von CTC Analytics durchgeführt. Die Trennungen wurden auf der stationären Phase Nucleosil $C_{18}$ (Länge: 50 mm, innerer Durchmesser 2 mm, Partikelgröße 3 µm) bei 35°C mit einer Flussrate von 0,5 ml/min erzielt. Die flüssige Phase bestand aus einem Gradienten aus A (Wasser + 0,05 % Ameisensäure) und B (Acetonitril + 0,05 % Ameisensäure) in der Zusammensetzung 5 % B bei 0 Minuten und einem Gradienten bis 100 % B bei 12 Minuten, dann 100 % B bei 15 Minuten. UV-Messungen wurden bei $\lambda$ = 210 bis 500 nm durchgerührt.

MS - Massenspektren von Substanz des Beispiels 1 wurde auf einem Finnigan TSQ 700 Spektrophometer mit (+)-Elektrospray im m/z-Bereich von 200 bis 1.500 gemessen.

Massenspektren von Substanzen der Beispiele 2 bis 4 wurden auf einem Waters ZMD 2000 Spektrophometer mit (+)-Elektrospray mit m/z-Bereich 110 bis 1.500 gemessen.

Säurezahl - Die Säurezahl wurde nach DIN 53 402 mindestens zweimal bestimmt. Der Durchschnittswert wird angegeben. Etwa 1 g der Probe wird auf 0,001 g genau in das Titriergefäß eingewogen und in 50 ml eines Gemisches aus 2 Volumenteilen Toluol und 1 Volumenteil Ethanol (95 %, Volumenanteil) gelöst. Bei schwer löslichen Substanzen kann die Lösungsmittelmenge bis auf das Dreifache erhöht werden, oder es können bis zu 25 ml Aceton zugegeben werden. Die Lösung wird nach Zugabe von 2 bis 3 Tropfen Phenolphthalein-Lösung bei Raumtemperatur mit alkoholischer KOH (hergestellt durch Lösen von 5,611 g KOH in Ethanol, 95 % Volumenanteil) rasch titriert, bis die auftretende Rotfärbung mindestens 10s bestehen bleibt (Verbrauch a). Während der Titration ist darauf zu achten, dass keine Fällungen auftreten. Gegebenenfalls sind sie durch Zugabe von etwas Lösungsmittel wieder in Lösung zu bringen. In gleicher Weise, jedoch ohne Probe, wird ein Blindversuch durchgeführt (Verbrauch b).

Die Säurezahl in mg KOH/g wird nach folgender Gleichung berechnet:

$$\text{Für } c(\text{KOH}) = 0{,}1 \text{ Mol/l: Säurezahl} = \frac{(a-b)x5{,}61}{E}$$

Hierin bedeuten:

- a Verbrauch in ml an KOH-Lösung bei der Titration der Probe
- b Verbrauch in ml an KOH-Lösung beim Blindversuch
- E Einwaage in g
- 5,61 Faktor zur Umrechnung von ml KOH-Lösung, $c$(KOH) = 0,1 Mol/l, in mg KOH

Herstellung und Prüfung von erfindungsgemäßen Formmassen und Vergleichsformmassen

Unter Verwendung der Oligophosphate der Beispiele 1 bis 4 und bekannter Oligophosphate wurden thermoplastische Polycarbonat-Formmassen 1 bis 5 (erfindungsgemäß) und V1 und V2 (Vergleich) hergestellt. Die Zusammensetzung der Formmassen ist in der Tabelle 1 wiedergegeben.

Die in Tabelle 1 angegebenen und nachfolgend kurz erläuterten Komponenten wurden auf einem 3-1-Innenkneter oder einer ZSK-25 bei 240°C compoundiert. Die Formkörper wurden auf einer Spritzgießmaschine Typ Arburg 270 E bei 240° hergestellt.

Komponente A.1

Lineares Polycarbonat auf Basis Bisphenol A mit einer relativen Lösungsviskosität von 1,24, gemessen in $CH_2Cl_2$ als Lösungsmittel bei 25°C und einer Konzentration von 0,5 g/100 ml.

Komponente A.2

Lineares Polycarbonat auf Basis Bisphenol A mit einer relativen Lösungsviskosität von 1,25, gemessen in $CH_2Cl_2$ als Lösungsmittel bei 25°C und einer Konzentration von 0,5 g/100ml.

Komponente B.1

Pfropfpolymerisat von 40 Gew.-Teilen eines Copolymerisats aus Styrol und Acrylnitril im Verhältnis von 73:27 auf 60 Gew.-Teile teilchenförmigen vemetzten Polybutadienkautschuk (mittlerer Teilchendurchmesser $d_{50}$ = 0,3 μm), hergestellt durch Emulsionspolymerisation.

Komponente B.2

Pfropfpolymerisat von 84 Gew.-Teilen eines Copolymerisats aus Styrol und Acrylnitril im Verhältnis von 73:27 auf 16 Gew.-Teile vemetzten Polybutadienkautschuk, hergestellt durch Massepolymerisation.

Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

Komponente D.1

Bisphenol-A-basierendes Oligophosphat

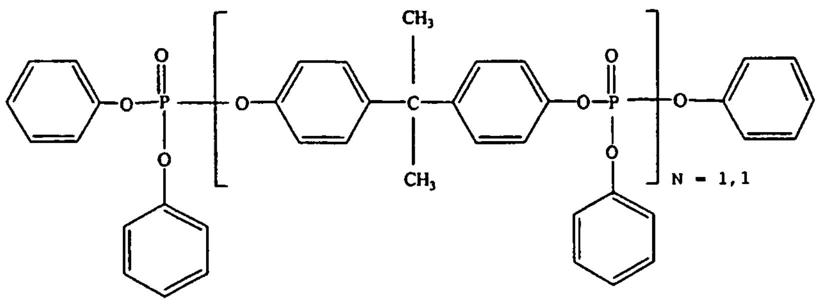

Komponente D.2

TMC-Bisphenoldiphosphat aus Beispiel 1

Komponente D.3

Methylcyclohexyl-Bisphenoldiphosphat aus Beispiel 3

Komponente D.4

Cyclohexyl-Bisphenoldiphosphat aus Vergleichsbeispiel 2

Komponente E.1

Talk: Naintsch® A3 (Naintsch Mineralwerke GmbH, Graz, Österreich) mit einem mittleren Partikeldurchmesser von 1,2 μm.

Komponente E.2

Pural® 200, ein nanoskaliges Aluminiumhydroxid [AlO(OH)], mittlere Teilchengröße etwa 50 nm (Fa. Condea, Hamburg, Deutschland)

Komponente F.1

Tetrafluorethylenpolymerisat als koagulierte Mischung aus einer SAN-Pfropf-polymerisat-Emulsion gemäß

oben genannter Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 μm. Die SAN-Pfropfpolymerisat-Emulsion besitzt einen Feststoffgehalt von 34 Gew.-% und einen mittleren Latexteilchendurchmesser von $d_{50}$ = 0,3 μm.

Die Emulsion des Tetrafluorethylenpolymerisats (Teflon® 30 N) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wässrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

<u>Komponente F.2</u>

Blendex® 449: PTFE-Präparat von General Electric Plastics aus 50 Gew.-% PTFE und 50 Gew.-% SAN-Copolymer.

<u>Komponente G.1</u>

Phosphitstabilisator

<u>Komponente G.2</u>

Pentaerythrittetrastearat (PETS) als Entformungsmittel

<u>Prüfung der erfindungsgemäßen Formmassen</u>

Die Bestimmung der Wärmeformbeständigkeit nach Vicat B und HDT/A erfolgt gemäß DIN 53 460 (ISO 306) bzw. ISO 75 an Stäben der Abmessung 80mm x 10mm x 4 mm.

Die Bestimmung der Kerbschlagzähigkeit $a_k$ wird gemäß ISO 180/1 A durchgeführt.

Das Brandverhalten der Proben wurde nach UL 94 V an Stäben der Dicken 1,6 und 3,2 mm gemessen.

Der UL 94 V-Test wird wie folgt durchgeführt:

Substanzproben werden zu Stäben der Abmessungen 127mm x 12,7mm x 1,6 (3,2) mm geformt. Die Stäbe werden vertikal so montiert, dass die Unterseite des Probekörpers sich 305 mm über einen Streifen Verbandstoff befindet. Jeder Probestab wird einzeln mittels zweier aufeinanderfolgender Zündvorgänge von 10s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x $10^4$ kJ/$m^3$ (1000 BUT per cubic foot) benutzt.

Die UL 94 V-O-Klassifizierung umfasst die nachstehend beschriebenen Eigenschaften von Materialien, die gemäß der UL 94 V-Vorschrift geprüft werden. Die Formmassen in dieser Klasse enthalten keine Proben, die länger als 10 s nach jeder Einwirkung der Testflamme brennen; sie zeigen keine Gesamtnachbrennzeit von mehr als 50 s bei der zweimaligen Flammeinwirkung auf jeden aus fünf Stäben bestehenden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben und/oder längere Einzel-/Gesamtnachbrennzeiten aufweisen. Diese Klassifizierungen werden mit UL 94 V-1 und V-2 bezeichnet. N.B. heißt "nicht bestanden" und ist die Klassifizierung von Proben, bei denen wiederholt Nachbrennzeiten von ≥ 30 s bei der ersten und/oder zweiten Beflammung beobachtet werden, oder die Gesamtnachbrennzeit aller zehn Beflammungen 250 s übersteigt.

Das Spannungsrissverhalten (ESC-Verhalten) wurde an Stäben der Abmessung 80mm x 10mm x 4 mm untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrissverhalten wurde über die Rissbildung bzw. den Bruch in Abhängigkeit von der Vordehnung im Testmedium beurteilt.

Die Schmelzviskosität wird bei 260°C und einer Scherrate von 1.000 $s^{-1}$ gemäß DIN 54811 bestimmt. Der MVR (Melt Volume Rate) wird gemäß ISO 1133 bei 240°C unter Verwendung einer Stempellast von 5 kg bestimmt.

Eine Zusammenstellung der Eigenschaften der erfindungsgemäßen Zusammensetzung oder daraus erhaltener Formkörper ist in der Tabelle 1 wiedergegeben.

Tabelle 1

| Formmasse/ Komponenten | V1 | 1 | V2 | 2 | 3 | V3 | 4 |
|---|---|---|---|---|---|---|---|
| A1 | 65,3 | 63,9 | - | - | - | 64,7 | 64,4 |
| A2 | - | - | 70,6 | 70,6 | 69,4 | - | - |
| B1 | 7,0 | 6,8 | 3,7 | 3,7 | 3,6 | 6,9 | 6,9 |
| B2 | - | - | 11,0 | 11,0 | 10,8 | - | - |
| C | 6,0 | 5,9 | - | - | - | 5,9 | 5,9 |
| D1 | 14,6 | - | 12,5 | - | - | - | - |
| D2 | - | 16,4 | - | 12,5 | 14,0 | - | - |
| D3 | - | - | - | - | - | - | 15,7 |
| D4 | - | - | - | - | - | 15,4 | - |
| E1 | 2,0 | 2,0 | - | - | - | 2,0 | 2,0 |
| E2 | - | - | 0,8 | 0,8 | 0,8 | - | - |
| F1 | 4,6 | 4,5 | - | - | - | 4,6 | 4,6 |
| F2 | - | - | 0,9 | 0,9 | 0,9 | - | - |
| G1 | 0,1 | 0,1 | 0,1 | 0,1 | 0,1 | 0,1 | 0,1 |
| G2 | 0,4 | 0,4 | 0,4 | 0,4 | 0,4 | 0,4 | 0,4 |
| Compoundierung: | | | | | | | |
| ZSK 25 | x | x | - | - | - | - | - |
| Innenkneter | - | - | x | x | x | x | x |
| Eigenschaften: | | | | | | | |
| HDT/A[°C] | 80 | 85 | 83 | 89 | 87 | - | - |
| Vicat B 120 [°C] | 96 | 104 | 102 | 110 | 108 | 97 | 99 |
| ESC-Verhalten Bruch bei εx [%] | 2,2 | 2,4 | 2,2 | 2,4 | 2,4 | 2,0 | 2,0 |
| $a_k$ [kJ/$m^2$] | 20 | 20 | 42 | 45 | 45 | 17 | 18 |
| MVR (240°C/5 kg) [ml/10 min] | 22 | 23 | 30 | 26 | 27 | 27 | 49 |
| Schmelzeviskosität (260°C/1000$s^{-1}$) [Pa·s] | 143 | 139 | 154 | 168 | 161 | 113 | 104 |
| UL 94 V bei 3,2 mm (Gesamtnachbrennzeit [s]) | V-0 (7) | V-0 (6) | V-0 (17) | V-0 (13) | V-0 (13) | V-0 (14) | V-0 (5) |
| UL 94 V bei 1,6 mm (Gesamtnachbrennzeit [s]) | V-0 (21) | V-0 (22) | - | - | - | V-0 (24) | - |

## Patentansprüche

**1.** Oligophosphate ausgewählt aus der Gruppe bestehend aus

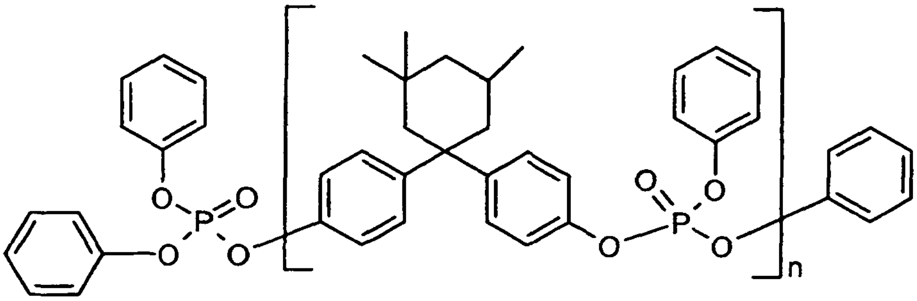

,

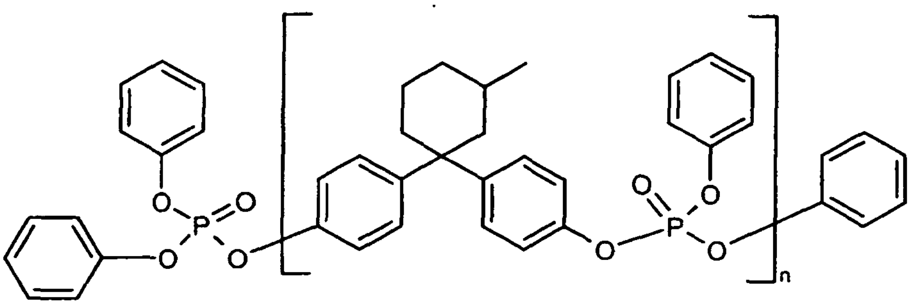

und

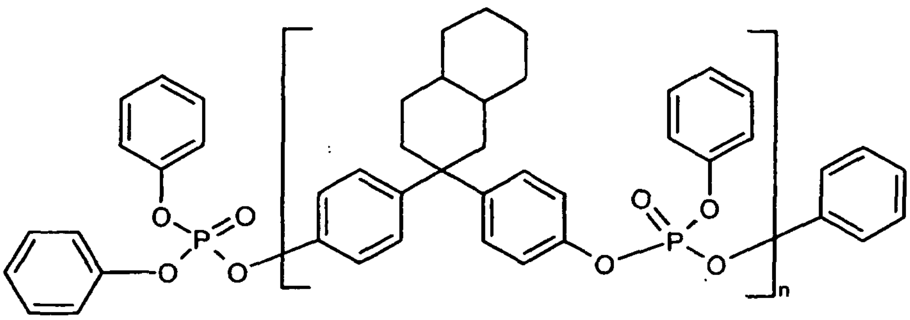

,

worin n jeweils eine ganze Zahl von 1 bis 30 bedeutet.

**2.** Oligophosphat nach Anspruch 1 der Formel

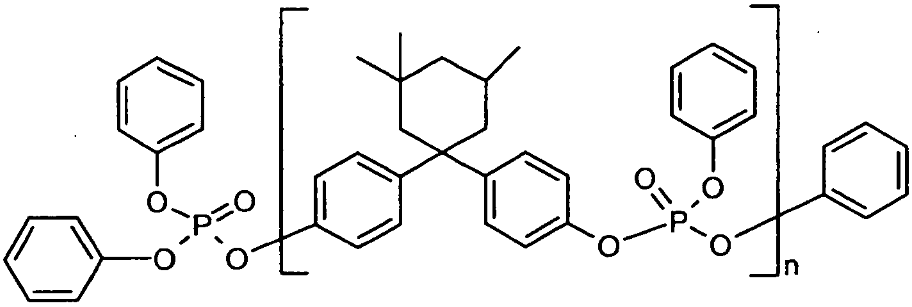

,

worin n eine ganze Zahl von 1 bis 30 bedeutet.

**3.** Oligophosphat nach Anspruch 1 der Formel

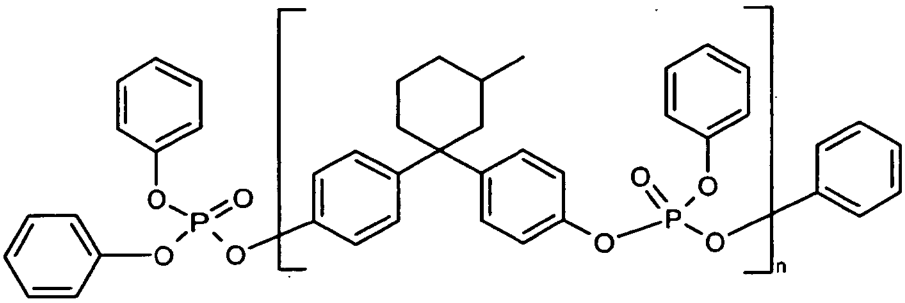

,

worin n eine ganze Zahl von 1 bis 30 bedeutet.

**4.** Oligophosphat nach Anspruch 1 der Formel

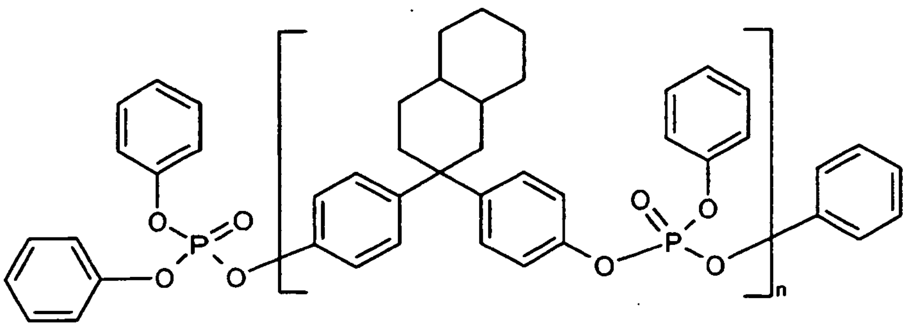

,

worin n eine ganze Zahl von 1 bis 30 bedeutet.

**5.** Verwendung der Oligophophate nach einem der Ansprüche 1 bis 4 als Flammschutzmittel.

**6.** Thermoplastische Zusammensetzung, enthaltend mindestens ein thermoplastisches Harz und ein Oligophosphat nach einem der Ansprüche 1 bis 4.

**7.** Thermoplastische Zusammensetzung nach Anspruch 6, worin das thermoplastische Harz ausgewählt ist aus Polycarbonat, Polyestercarbonat, Polyphenylenoxid, Polyester, Polyamid, Polyesteramid, Vinyl(Co)Polymerisate und

Acryl/Butadien/Styrol (ABS)-Copolymeren.

8. Thermoplastische Zusammensetzung nach Anspruch 6 oder 7 mit einem Polycarbonat, worin bezogen auf das Gewicht der Zusammensetzung bis zu 50 Gew.-% eines Pfropfpolymerisats aus 5 bis 95 Gew.-% wenigstens eines Vinylmonomeren auf 95 bis 5 Gew.-% mindestens einer Pfropfgrundlage mit einer Glastemperatur kleiner etwa 10°C enthalten ist.

9. Thermoplastische Zusammensetzung nach Anspruch 8, worin das Pfropfpolymerisat ein solches auf der Grundlage von Dien-, EP(D)M-, Acrylat- oder Silikonkautschuken ist.

10. Thermoplastische Zusammensetzung nach einem der Ansprüche 8 oder 9, worin als Pfropfpolymerisat ein Emulsions- oder Masse-ABS oder deren Mischungen enthalten sind.

11. Thermoplastische Zusammensetzung nach einem der Ansprüche 6 bis 10, worin ein fluoriertes Polyolefin enthalten ist.

12. Thermoplastische Zusammensetzung nach einem der Ansprüche 6 bis 11, worin ein nanoskaliges anorganisches Material oder Talk enthalten ist.

13. Formkörper, enthaltend eine thermoplastische Zusammensetzung nach einem der Ansprüche 6 bis 12.

14. Formkörper nach Anspruch 13 in Form einer Folie, eines Profils, eines Innenausbauteils für ein Schienenfahr-, See-, Luft- oder Kraftfahrzeug, eines Karosserieteils für Kraftfahrzeuge, eines Gehäuses von einem einen Kleintransformator enthaltenden Elektrogerät, eines Gehäuses für Geräte zur Informationsverarbeitung und Informationsübermittlung, eines Gehäuses oder einer Verkleidung für medizinisches Gerät, eines Spielfahrzeugs für Kinder, eines flächigen Wandelements, eines Gehäuse für eine einer Sicherheitseinrichtung, eines wärmeisolierten Transportbehältnisses, einer Vorrichtung zur Haltung oder Versorgung von Kleintieren, eines Formteils für Sanitär- und Badausrüstungen, eines Abdeckgitters für Lüfteröffnungen, einer Platte, eines Rohrs, eines Elektroinstallationskanals im Innenausbau und für Außenanwendungen, eines Formteils für Garten- und Gerätehäuser oder eines Gehäuses für Gartengeräte.

**Claims**

1. Oligophosphates selected from the group consisting of

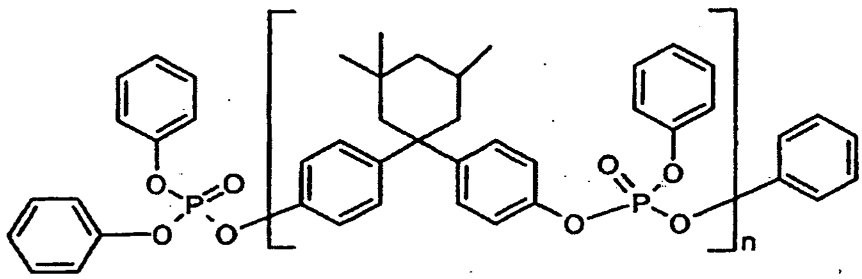

,

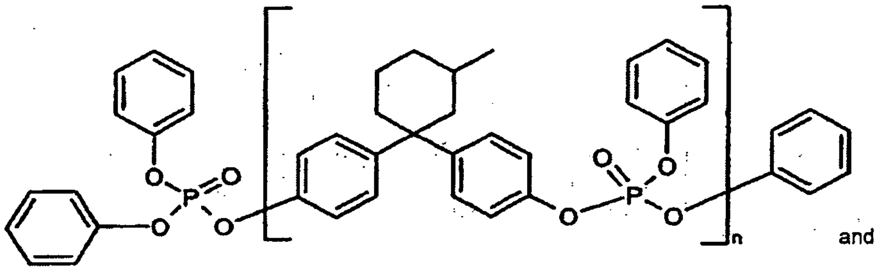

and

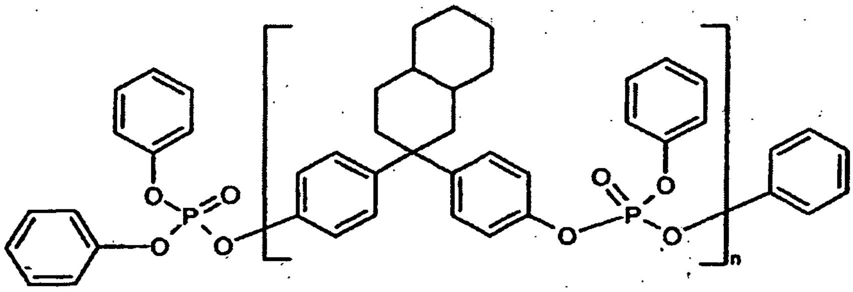

,

wherein n in each case denotes an integer from 1 to 30.

**2.** Oligophosphate according to claim 1 of formula

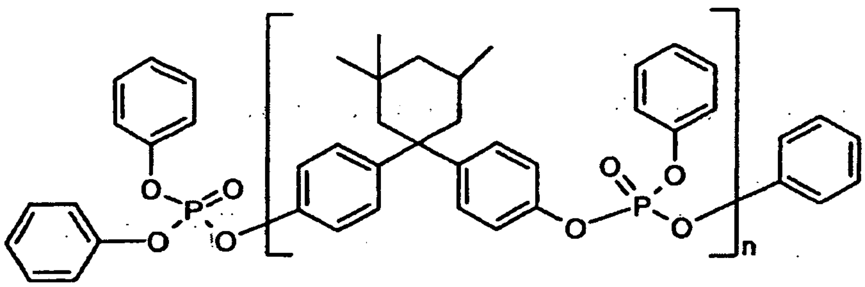

,

wherein n denotes an integer from 1 to 30.

**3.** Oligophosphate according to claim 1 of formula

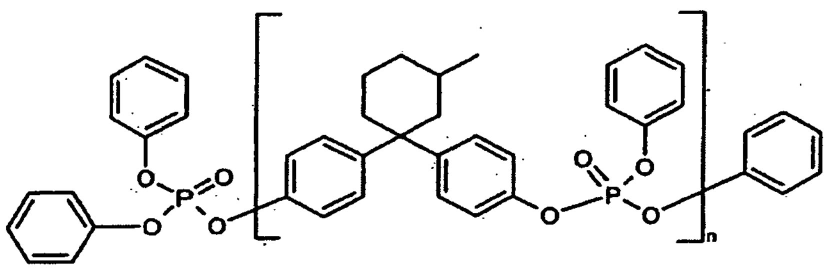

,

wherein n denotes an integer from 1 to 30.

4. Oligophosphate according to claim 1 of formula

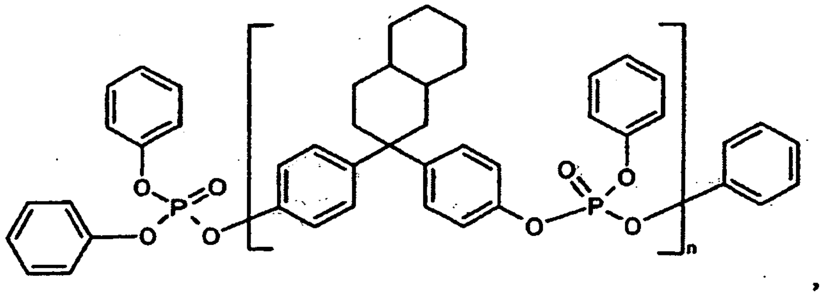

wherein n denotes an integer from 1 to 30.

5. Use of the oligophosphates according to any one of claims 1 to 4 as flame retardants.

6. Thermoplastic composition containing at least one thermoplastic resin and an oligophosphate according to any one of claims 1 to 4.

7. Thermoplastic composition according to claim 6, wherein the thermoplastic resin is selected from polycarbonate, polyester carbonate, polyphenylene oxide, polyester, polyamide, polyester amide, vinyl (co)polymers and acryliclbutadiene/styrene (ABS) copolymers.

8. Thermoplastic composition according to either claim 6 or claim 7 comprising a polycarbonate, wherein, with respect to the weight of the composition, said composition contains up to 50 % by weight of a graft polymer comprising 5 to 95 % by weight of at least one vinyl monomer on 95 to 5 % by weight of at least one graft base having a glass transition temperature lower than about 10 °C.

9. Thermoplastic composition according to claim 8, wherein the graft polymer is a diene-, EP(D)M-, acrylate- or silicone rubber-based polymer.

10. Thermoplastic composition according to either claim 8 or claim 9, which contains an emulsion- or bulk-polymerised ABS or mixtures thereof as a graft polymer.

11. Thermoplastic composition according to any one of claims 6 to 10, which contains a fluorinated polyolefin.

12. Thermoplastic composition according to any one of claims 6 to 11, which contains a nano-scale inorganic material or talc.

13. Moulded article containing a thermoplastic composition according to any one of claims 6 to 12.

14. Moulded article according to claim 13 in the form of sheeting, a section, an interior fitting component for a rail, sea, air or road vehicle, a bodywork part for motor vehicles, a housing for an electrical appliance containing a miniature transformer, a housing for devices for information processing and information transfer, a housing or covering for medical equipment, a toy vehicle for children, a sheet-like wall element, a housing for a safety device, a thermally insulated transport container, an apparatus for housing or supplying small animals, a moulding for sanitary and bath fittings, a covering grille for ventilation openings, a slab, a pipe, an electrical installation conduit for interior fittings and for external use, a moulding for garden buildings and tool sheds or a housing for garden equipment.

## Revendications

1. Oligophosphates choisis dans le groupe constitué de

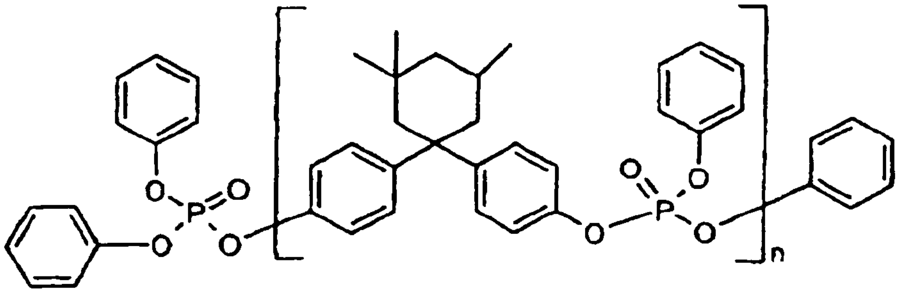

,

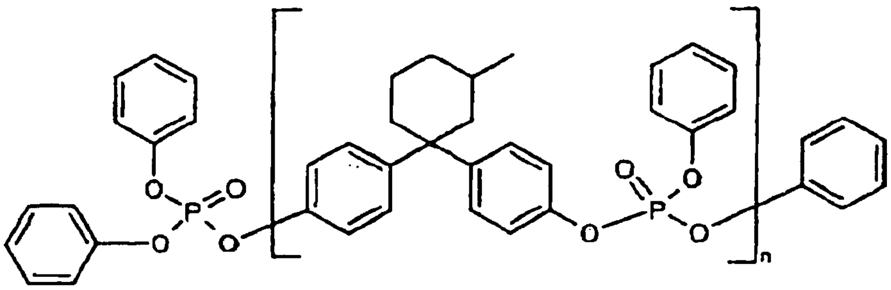

et

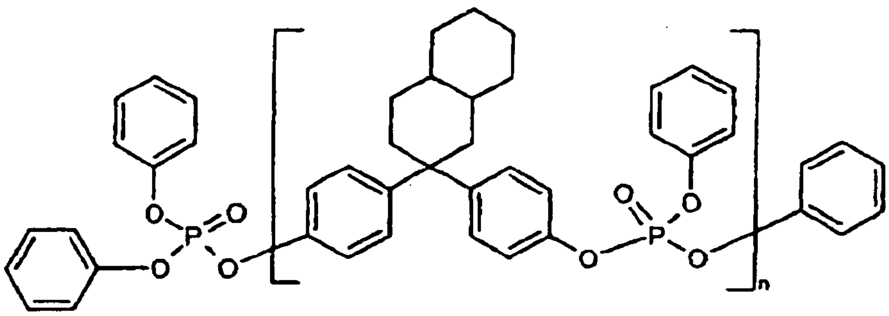

,

où n représente respectivement un nombre entier de 1 à 30.

**2.** Oligophosphate selon la revendication 1 de formule

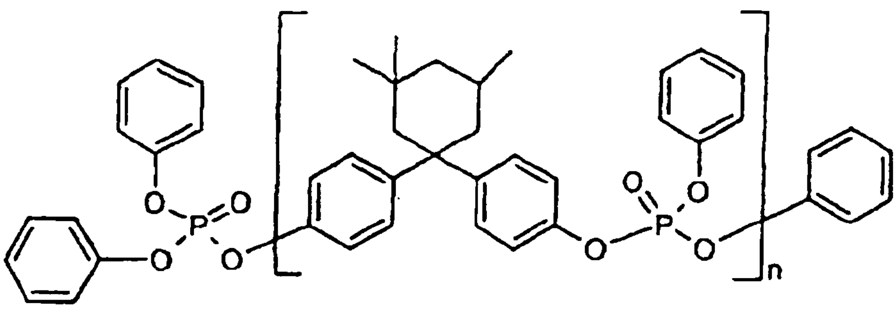

,

où n représente respectivement un nombre entier de 1 à 30.

3. Oligophosphate selon la revendication 1 de formule

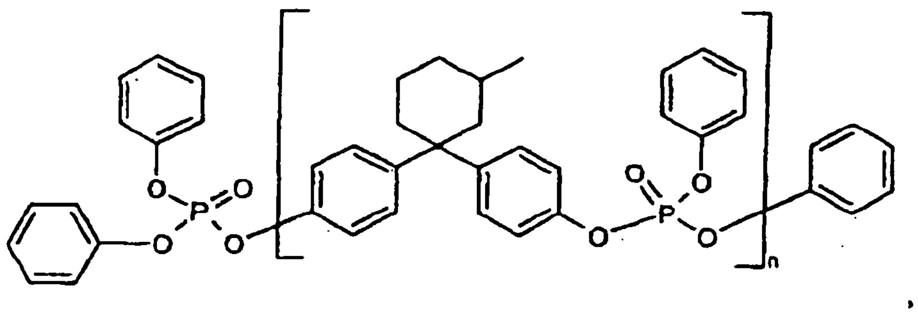

où n représente respectivement un nombre entier de 1 à 30.

4. Oligophosphate selon la revendication 1 de formule

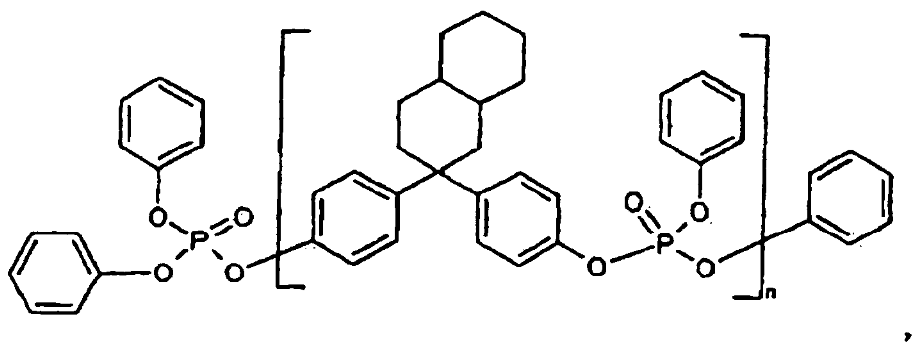

où n représente respectivement un nombre entier de 1 à 30.

5. Utilisation des oligophosphates selon l'une des revendications 1 à 4 à titre d'agents ignifuges.

6. Composition thermoplastique, contenant au moins une résine thermoplastique et un oligophosphate selon l'une des revendications 1 à 4.

7. Composition thermoplastique selon la revendication 6, dans laquelle la résine thermoplastique est choisie parmi le polycarbonate, le carbonate de polyester, l'oxyde de polyphénylène, le polyester, le polyamide, le polyesteramide, les (co)polymères de vinyle et les copolymères d'acryle/ butadiène/ styrène (ABS).

8. Composition thermoplastique selon la revendication 6 ou 7 avec un polycarbonate, contenant, par rapport au poids de la composition, jusqu'à 50 % en poids d'un polymère greffé constitué de 5 à 95 % en poids d'au moins un monomère vinylique sur 95 à 5 % en poids d'au moins une base de greffage ayant une température de transition vitreuse inférieure à environ 10°C.

9. Composition thermoplastique selon la revendication 8, dans laquelle le polymère greffé en est un du genre à base de caoutchoucs de diène, d'EP(D)M, d'acrylate ou de silicone.

10. Composition thermoplastique selon l'une des revendications 8 ou 9, contenant à titre de polymère greffé, un ABS en émulsion ou en masse ou ses mélanges.

11. Composition thermoplastique selon l'une des revendications 6 à 10, contenant une polyoléfine fluorée.

12. Composition thermoplastique selon l'une des revendications 6 à 11, contenant un matériau inorganique nanoscalaire ou talc.

13. Corps moulé, contenant une composition thermoplastique selon l'une des revendications 6 à 12.

14. Corps moulé selon la revendication 13, sous la forme d'une feuille, d'un profil, d'une pièce d'aménagement intérieur pour un véhicule sur rails, un navire, un avion ou autre véhicule à moteur, d'une pièce de carrosserie pour automobiles, d'un boîtier d'appareils électroménagers contenant de petits transformateurs, d'un boîtier pour des appareils de traitement et transmission de données, d'un boîtier ou d'un habillage d'appareils médicaux, d'une petite voiture pour enfants, d'un élément mural en panneaux, d'un boîtier pour un dispositif de sécurité, d'un récipient pour le transport isolé thermiquement, d'un dispositif pour la garde et le soin de petits animaux, d'une pièce moulée pour des équipements sanitaires et des salles de bains, d'une grille pour les ouvertures de ventilation, d'une plaque, d'un tube, d'un canal d'installation électrique pour l'aménagement intérieur et les applications extérieures, d'une pièce moulée pour maisons de jardin et cabanes à outils ou d'un logement pour des outils de jardinage.